Europäisches Patentamt

European Patent Office

Office européen des brevets

(19)

(11) Veröffentlichungsnummer: **0 111 248**
**B1**

(12) **EUROPÄISCHE PATENTSCHRIFT**

(45) Veröffentlichungstag der Patentschrift:
**27.08.86**

(51) Int. Cl.⁴: **F 16 L 11/16**

(21) Anmeldenummer: **83112025.8**

(22) Anmeldetag: **30.11.83**

(54) Doppelwandiger, flexibler Schlauch.

(30) Priorität: **14.12.82 DE 3246247**

(43) Veröffentlichungstag der Anmeldung:
**20.06.84 Patentblatt 84/25**

(45) Bekanntmachung des Hinweises auf die Patenterteilung:
**27.08.86 Patentblatt 86/35**

(84) Benannte Vertragsstaaten:
**DE FR GB IT**

(56) Entgegenhaltungen:
**EP - A - 0 039 495
BE - A - 565 101
DE - U - 8 012 326
FR - A - 737 033
FR - A - 2 505 445
GB - A - 2 040 013**

(73) Patentinhaber: **Siemens Aktiengesellschaft Berlin und München, Wittelsbacherplatz 2, D-8000 München 2 (DE)**
Patentinhaber: **Techno-Chemie Kessler & Co. GmbH, Voltastrasse 71-75, D-6000 Frankfurt/Main 90 (DE)**

(72) Erfinder: **Eichelberger, Leo, Friedrich-Ebert-Strasse 73, D-6090 Rüsselsheim (DE)**
Erfinder: **Ciszewski, Hans-Joachim, Wasserwerk, Wohnhaus 1, D-6141 Einhausen (DE)**

(74) Vertreter: **Mehl, Ernst, Dipl.-Ing. et al, Postfach 22 01 76, D-8000 München 22 (DE)**

## Beschreibung

1. Die Erfindung betrifft einen doppelwandigen, flexiblen Schlauch, der in an sich bekannter Weise aus einem wendelförmig verlaufenden Wickelprofil aufgebaut ist, welches im Querschnitt gesehen ein der Wandstärke des Schlauches entsprechendes Mittelteil und sich daran anschliessende, die Aussen- und Innenwand des Mittelteils weiterführende Fortsätze enthält, die mit benachbarten Flächen des Wickelprofils verbunden sind, sowie ein Verfahren zur Herstellung eines solchen Schlauches.

Für Absaug- bzw. Unterdruckssysteme werden vielfach Schläuche eingesetzt, die – um ein Zusammenfallen zu verhindern, mit Bewehrungs- oder Stützwendeln versehen sind.

Derartige Schlauchkonstruktionen sind zwar leicht und flexibel; nachteilig ist jedoch die durch die Stützwendel bedingte wellenförmige Aussenkontur, die speziell bei Einsatzgebieten mit besonderen hygienischen Anforderungen, z. B. im medizinischen Bereich, Probleme hinsichtlich der Reinhaltung aufwirft. Es ist schwierig, wenn nicht gar unmöglich, eine wellenförmige Oberfläche auf Dauer einwandfrei sauber zu halten.

Um diese Nachteile auszuschalten, hat man zwar schon versucht (AT-A-239019), den Schläuchen sowohl innen als auch aussen eine glattere Wandung zu geben, indem man über die wellenförmige Aussenkontur des Innenschlauches einen Überzugsschlauch, also eine zweite Aussenhaut, extrudiert bzw. aufgezogen hat. Mit einer solchen Schlauchverstärkung kann zwar unter weitgehender Beibehaltung der Flexibilität eine verhältnismässig glatte Aussenkontur erreicht werden, nach wie vor weist ein solcher Schlauch jedoch die bei solchen Spiralschläuchen typischen, leicht wellenförmigen Konturen auf, mit den zuvor geschilderten Nachteilen einer schlechten Reinigung und Sauberhaltung der Oberfläche.

Aus dem DE-U-8012326 ist eine Schlauchkonstruktion bekannt, die einen inneren und konzentrisch dazu angeordneten äusseren geschlossenen Schlauchmantel aufweist, wobei zwischen beiden Schlauchmänteln eine mit diesen verbundene Verstärkungswendel angeordnet ist. Diese Schlauchkonstruktion ist insofern schwierig herzustellen, als der Schlauch aus den Einzelkomponenten Innenschlauch, Wendel und Aussenschlauch besteht, die getrennt hergestellt und miteinander verbunden werden müssen. Dies bedingt einen umfangreichen maschinellen Aufwand, wobei durch den zeitlich und räumlich versetzten Herstellungsprozess der Einzelkomponenten eine gute Verbindung der Einzelkomponenten untereinander sehr schwierig ist. Die Kontur des Aussenschlauches ist auch hier leicht wellenförmig, um bei den in axialer Richtung verhältnismässig kurzen Abständen zwischen den Stützwendelgängen noch eine relativ gute Flexibilität zu erreichen.

Aus der BE-A-565101 ist ein bevorzugt für Erdverlegung gedachtes Kunststoffrohr sowie ein Verfahren zur Herstellung eines solchen Rohres bekannt. Das Kunststoffrohr wird durch schraubenförmiges Wickeln eines oder mehrerer Bänder aus halbfliessendem, jedoch relativ steifem Material hergestellt. Durch das Wickeln der Bänder werden innenliegende, schraubenförmig verlaufende Hohlräume geschaffen, die dem relativ steifen Rohr eine begrenzte Flexibilität geben. Das Rohr bleibt so bei von aussen einwirkenden Belastungen (Erdreich) zwar formstabil; ist aber in engen Grenzen etwas nachgiebig. Um das Rohr gegen Druck und radiale Ausdehnung widerstandsfähiger zu machen, können die Hohlräume entweder mit Luft gefüllt sein, was bedeutet, dass die Luftkammern geschlossen sein müssen, oder mit einem im Vergleich zum Rohrwickelmaterial noch steiferen Material, z. B. Asbest, Zement, Polyester, Glasfiber oder dergleichen.

Die vorliegende Erfindung betrifft kein Kunststoffrohr und befasst sich nicht mit der Herstellung eines solchen Rohres, ihre Zielsetzung liegt vielmehr in der Verbesserung der bisher bekannten flexiblen Schlauchkonstruktionen, um die eingangs erläuterten Nachteile zu vermeiden.

Der im Anspruch 1 angegebenen Erfindung liegt die Aufgabe zugrunde, einen Schlauch zu schaffen, der unter Erhaltung hoher Flexibilität und ausreichender Stützfunktion sowohl innen als auch aussen eine optimal glatte Oberfläche aufweist und darüber hinaus fertigungstechnisch leichter herzustellen ist als bisherige Konstruktionen.

Die erfindungsgemässe Schlauchkonstruktion zeichnet sich durch folgende Vorzüge aus:
– innen und aussen glatte Schlauchwand
– hohe Flexibilität und ausreichende Stützfunktion durch Verwendung einerseits eines weichen Materials für das Wickelprofil und andererseits eines demgegenüber harten Materials für die Verstärkung in Verbindung mit dem im Schlauch vorgesehenen Hohlräumen, deren Breitenverhältnis zur Verstärkungswendel $\geqq$ 1:1 beträgt
– fertigungstechnisch einfache Herstellung des Schlauches durch Wickeln aus koextrudiertem Profil.

Die im Koextrusionsverfahren hergestellten Profile werden im plastischen Zustand zu einem Schlauch gewickelt. Die Profile sind in einigen Ausführungsformen derart ausgebildet, dass beim Wickeln in der Schlauchwandung die Hohlräume entstehen. Mit Hilfe von z. B. Stützluft kann verhindert werden, dass die genannten Hohlräume während des Wickelprozesses zusammenfallen. Die Hohlräume sind zweckmässigerweise in radialer Richtung gesehen dicht, so dass sie mit Vorteil zur Durchführung strömender Medien verwendet werden können. Darüber hinaus können sie auch zur Führung diverser Leitungen und Kabel herangezogen werden.

Die erfindungsgemässe Schlauckonstruktion wird anhand der Zeichnungen näher erläutert.

Fig. 1 zeigt eine Ausführungsform des erfindungsgemässen Schlauches in vereinfachter Darstellung, teilweise im Längsschnitt;

Fig. 2 zeigt die in Fig. 1 gezeigte Ausführungsform des erfindungsgemässen Schlauches mit detaillierter Darstellung des Schlauchaufbaus bzw. des Wickelprofils im Schnitt;

Fig. 3 bis 6 zeigen weitere Varianten des Schlauchaufbaus bzw. des Wickelprofils im Schnitt.

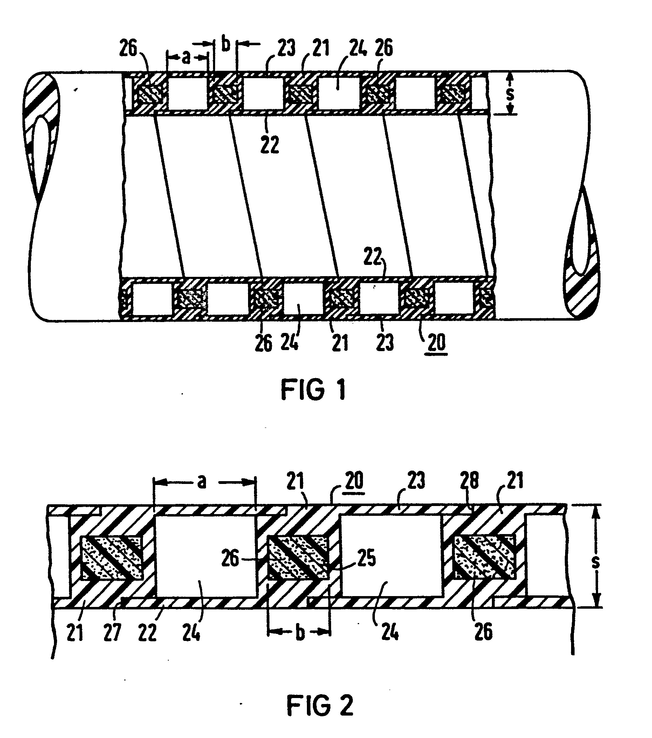

Die Schlauchkonstruktion gemäss Fig. 1 und 2 besteht aus einem gewickelten, im Querschnitt ⌐-förmig ausgebildeten Profil 20, welches ein Profilmittelteil 21 enthält, an dem sich oben und unten Verbindungsstege bildende Fortsätze 22, 23 anschliessen. Der untere Fortsatz 22 bildet einen Innensteg und ist damit Teil der Innenwandung des Schlauches, der obere Fortsatz 23 bildet einen Aussensteg und ist damit Teil der Aussenwandung des Schlauches. Das Profil 20 wird nun dergestalt gewickelt, dass die Innenstege 22 mit einem bestimmten Längenabschnitt unter dem Profilmittelteil 21 zu liegen kommen, die Aussenstege 23 dagegen den Mittelteil 21 bis etwa zur Hälfte (oder auch weiter) übergreifen. Die Übergänge sind, sowohl oben als auch unten, bündig, wodurch sich völlig glatte Aussen- und Innenflächen erzielen lassen. Durch Flächen bzw. Abschnitte einerseits der Stege 22, 23 und andererseits der Profilmittelteile 21 wird ein Hohlraum 24 gebildet. Dieser Hohlraum 24 bringt in Verbindung mit der relativ dünnen Wandstärke, die die Fortsätze 22, 23 aufweisen, einerseits die geforderte Flexibilität, andererseits kann er auch zur Führung von Kabeln oder fluiden Medien herangezogen werden. Die Fortsätze 22 und 23 haben, um eine optimale Flexibilität zu bekommen, vorzugsweise eine Wandstärke von ca. 0,2 x s (s = Wandstärke des Schlauches). Das Profil 20 enthält eine gesonderte Verstärkung in Form einer in einem weiteren Hohlraum 25 des Mittelteils 21 angeordneten Stützwendel 26. Diese besteht vorzugsweise aus einem dem Wickelprofil artgleichen, jedoch härteren elastomeren bzw. thermoplastischen Material. Die Breite (a) des Hohlraumes 24 verhält sich zur Breite (b) der Verstärkung 26 mindestens wie 1:1, vorteilhafterweise ist der Hohlraum 24, wie beim Ausführungsbeispiel gezeigt, wesentlich breiter als die Verstärkung 26. Die Verbindung der Profilstegeenden mit dem Mittelteil 21 erfolgt an den mit 27 und 28 bezeichneten Stellen und wird durch Zusammenwickeln im plastischen Zustand erreicht, wobei diese Verbindung jedoch auch durch Verschweissen (mittels Heissluft o.ä.) oder Verkleben erreicht werden kann.

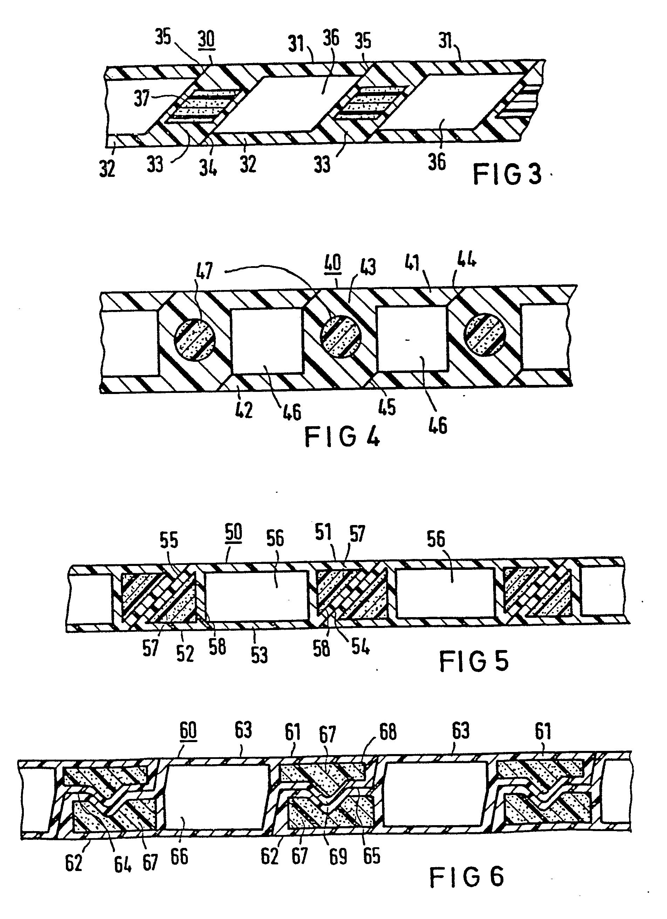

Fig. 3 zeigt eine weitere Variante der erfindungsgemässen Konstruktion. Bei diesem Vorschlag findet ein Wickelprofil 30 Verwendung, welches im Querschnitt schräge Flächen aufweist und derart gewickelt ist, dass die Innen- und Aussenstege 31, 32 mit dem Mittelteil 33 an den Flächen 34, 35 miteinander verbunden sind. Der wendelförmige Hohlraum 36 wird auch hier einerseits durch die Verbindungsstege 31, 32 und andererseits durch Flächen bzw. Abschnitte der Profilmittelteile 33 benachbarter Profilteile beim Wickelvorgang gebildet. Die Verstärkung 37 ist hier als Rhombus ausgebildet.

Fig. 4 zeigt eine vom Aufbauprinzip gleiche Konstruktion, jedoch mit profilmässig anderem Aufbau. Das Profil 40 ist hier derart gewickelt, dass die Aussen- und Innenstege 41, 42 mit dem Profilmittelteil 43 an den Stellen 44, 45 mit schrägen Flächenabschnitten miteinander verbunden sind. Hierbei entsteht wiederum der Hohlraum 46. Die Stützwendel 47 weist in diesem Fall einen runden bzw. ovalen Querschnitt auf.

Fig. 5 zeigt eine weitere Variante der erfindungsgemässen Konstruktion. Hier wird der Schlauch aus einem Wickelprofil 50 gebildet, welches im Querschnitt dreieckförmige Fortsätze 51, 52 aufweist, die sich an das Profilmittelteil 53 bündig anschliessen, wodurch eine völlig glatte Oberfläche sowohl innen als auch aussen erzielt wird. Die Fortsätze 51, 52 werden auch hier beim Wickelvorgang an den Stellen 54, 55 miteinander verbunden. Im Gegensatz zu den zuvor beschriebenen Konstruktionen bildet hier das Mittelteil 53 einen Hohlraum 56. Die Verstärkung bzw. Bewehrung erfolgt hier durch zwei im Querschnitt dreieckförmige Stützwendeln 57, die in entsprechend vorgesehenen Hohlräumen 58 verlaufen. Diese Hohlräume 58 werden durch die Fortsätze 51 bzw. 52 selbst gebildet und sind, in radialer Richtung gesehen, geschlossen, so dass der so gebildete Hohlraum ohne Aussteifung oder mit nur Teilaussteifung zur Führung fluider Medien herangezogen werden kann. ein weiterer Vorteil dieses Profils liegt darin, dass die versteiften Fortsätze beidseitig des Hohlraumes 56 vorhanden sind und das Zusammenfügen der schrägen Kontaktflächen 54, 55 im Bereich dieser Aussteifung erfolgt; der beim Zusammenfügen der Windungen erforderliche Andruck führt bei dieser Konstruktion zu keiner Verformung des Profils.

Fig. 6 zeigt ein ähnliches Profil wie unter Fig. 5 beschrieben, d.h., das Wickelprofil 60 enthält ein mit Hohlraum 66 versehenes Profilmittelteil 63 mit beidseitig angeformten Fortsätzen 61, 62, die parallel zur Schlauchachse verlaufende Tragflächen bilden und in entsprechenden Hohlräumen 68 angeordnete Stützwendeln 67 enthalten. Das Profil ist an den Stellen 64, 65 miteinander verbunden. Die Verbindnungstellen 64, 65 sind hier jedoch so ausgebildet, dass das Profil mittels eines Vorsprunges 69 (Nase) im einen Fortsatz 61 in ein entsprechendes Gegenprofil des anderen Fortsatzes 62 einläuft, so dass beim Wickelvorgang der einzelnen Windungen eine gute Positionierung bzw. eine Zwangsführung gegeben ist.

Die Aussteifung der nicht zur Verstärkung herangezogenen Hohlräume erfolgt vorteilhafterweise mit weichem, elastischem Material, vorzugsweise mit Schaumstoff, der während des Extrudiervorgangs in die Hohlräume eingebracht wird. Denkbar ist auch, die Hohlräume nachträglich auszuschäumen.

Die erfindungsgemässe Schlauchkonstruktion beschränkt sich nicht auf die geschilderten Konstruktionsarten, vielmehr können weitere Wickelprofilvarianten im Rahmen des vorgestellten Prinzips zum Einsatz kommen. In diesem Zusammenhang sei beispielsweise ergänzend bemerkt, dass im Gegensatz zu den in den Fig. 2 bis 6 gezeigten Ausführungsformen, bei denen die Mittelteile je-

5 **0111248** 6

weils nur einen Hohlraum enthalten, die Mittelteile auch aus jeweils mehreren Kammern aufgebaut sein können, deren Trennwandungen die Verstärkung bilden und so die erforderliche Steifigkeit bewirken. Sowohl die Verstärkung als auch die Elastizität können durch das in den Hohlräumen angeordnete Material beeinflusst werden. So kann es vorteilhaft sein, dann, wenn zwei oder noch mehr Hohlräume vorhanden sind, den einen Hohlraum mit einem für die Stützfunktion geeigneten, relativ harten Material, im Extremfalle mit einer Stahlwendel, zu versehen, den anderen Hohlraum dagegen mit einem relativ weichen, elastischen Material, z.B. mit Schaumstoff, zu füllen.

**Patentansprüche**

1. Doppelwandiger, flexibler Schlauch, der in an sich bekannter Weise aus einem wendelförmig verlaufenden Wickelprofil (20, 30, 40, 50, 60) aufgebaut ist, welches im Querschnitt gesehen ein der Wandstärke (s) des Schlauches entsprechendes Mittelteil (21, 33, 43, 53, 63) und sich daran anschliessende, die Aussen- und Innenwand des Mittelteils weiterführende Fortsätze (22, 23; 31, 32; 41, 42; 51 52; 61, 62) enthält, die mit benachbarten Flächen des Wickelprofils verbunden sind, dadurch gekennzeichnet, dass das Wickelprofil (20, 30, 40, 50, 60) aus weichem Material besteht und eine wendelförmig verlaufende Verstärkung (26, 37, 47, 57, 67) aus dem gegenüber hartem Material enthält, die im Profilmittelteil (21, 33, 43) oder in den Fortsätzen (51, 52, 61, 62) angeordnet ist, wobei die Anordnung so getroffen ist, dass der gewickelte Schlauch zwischen der wendelförmig verlaufenden Verstärkung einen wendelförmig verlaufenden Hohlraum aufweist, der jeweils durch die Fortsätze (22, 23, 31, 32, 41, 42) zweier benachbarter Windungen oder im Profilmittelteil (53, 63) des Wickelprofils gebildet ist.

2. Schlauch nach Anspruch 1, dadurch gekennzeichnet, dass als Wickelprofil ein ⊐-Profil vorgesehen ist, mit einem Mittelteil (21, 33, 43), welches wenigstens einen ersten, die Verstärkung (26) enthaltenden Hohlraum (25, 37, 47) bildet und dass die beiden Fortsätze (22, 23; 31, 32; 41, 42) einen weiteren Hohlraum (24, 36, 46) bilden.

3. Schlauch nach Anspruch 1, dadurch gekennzeichnet, dass die beiden Fortsätze (51, 52; 61, 62) für sich jeweils einen Hohlraum (58, 68) bilden.

4. Schlauch nach Anspruch 3, dadurch gekennzeichnet, dass beidseitig des Mittelteils (53) im Querschnitt dreieckförmige Fortsätze (51, 52) vorhanden sind, die über eine gemeinsame Fläche (54, 55) mit benachbarten Fortsätzen (51, 52) des Wickelprofils verbunden sind.

5. Schlauch nach Anspruch 3, dadurch gekennzeichnet, dass die Fortsätze (61, 62) mit einem eine Zwangsführung beim Wickelvorgang bildenden Ansatz (69) versehen sind.

6. Schlauch nach einem der Ansprüche 1 bis 5, dadurch gekennzeichnet, dass das Verhältnis der Breite (a) der nicht zur Verstärkung dienenden Hohlräume (24, 36, 46, 56, 66) zur Breite (b) der Verstärkung (26, 37, 47, 57, 67) gleich/grösser 1:1 ist.

7. Schlauch nach einem der Ansprüche 1 bis 6, dadurch gekennzeichnet, dass die Innen- und Aussenwandung des Schlauches bzw. die den Hohlraum (24, 36, 46, 56, 66) begrenzenden Wandungen (22, 23; 31, 32; 41, 42) eine Stärke von etwa 0,2 × s (s = Wandstärke des Schlauches) aufweisen.

8. Schlauch nach Anspruch 1, dadurch gekennzeichnet, dass die Fortsätze (22, 23, 31, 32, 41, 42, 51, 52, 61, 62) das Profilmittelteil (21, 33, 43, 53, 63) bündig übergreifen.

9. Schlauch nach einem der Ansprüche 1 bis 8, dadurch gekennzeichnet, dass die einzelnen Windungen des Wickelprofils (30, 40, 50, 60) schräge Verbindungsflächen (34, 35; 44, 45; 54, 55) aufweisen.

10. Schlauch nach einem der Ansprüche 1 bis 9, dadurch gekennzeichnet, dass als Verstärkung eine in wenigstens einem der Hohlräume (25, 58, 68) angeordnete Stützwendel (26, 37, 47, 57, 67) vorgesehen ist.

11. Schlauch nach einem der Ansprüche 1 bis 9, dadurch gekennzeichnet, dass die Verstärkung (26, 37, 47, 57, 67) durch Ausschäumen des betreffenden Hohlraumes (25, 58, 68) gebildet ist.

12. Schlauch nach einem der Ansprüche 2 bis 11, dadurch gekennzeichnet, dass der nicht für eine Verstärkung benutzte Hohlraum (24, 36, 46, 56, 66) mit weichem, elastischem Material, vorzugsweise mit Schaumstoff, gefüllt ist.

13. Schlauch nach einem der Ansprüche 2 bis 11, dadurch gekennzeichnet, dass der nicht zur Verstärkung benutzte Hohlraum (24, 36, 46, 56, 66) zur Führung von Leitungen, Kabeln od. dgl. verwendbar ist.

14. Schlauch nach einem der Ansprüche 2 bis 11, dadurch gekennzeichnet, dass der nicht zur Verstärkung benutzte Hohlraum (24, 36, 46, 56, 66) in radialer Richtung geschlossen und so zur Führung eines strömenden Mediums verwendbar ist.

15. Schlauch nach einem der Ansprüche 1 bis 14, dadurch gekennzeichnet, dass er als Saug- und/oder Druckschlauch bei zahnärztlichen Geräten verwendbar ist.

16. Verfahren zur Herstellung von doppelwandigen, flexiblen Schläuchen nach einem der Ansprüche 1 bis 15, dadurch gekennzeichnet, dass ein im Extrusionsverfahren hergestelltes Profil (20, 30, 40, 50, 60) mit vorzugsweise ⊐-förmigem Querschnitt im plastischen Zustand zu einem Schlauch gewickelt wird.

17. Verfahren nach Anspruch 16, dadurch gekennzeichnet, dass die zur Verstärkung vorgesehenen Hohlräume während des Extrudierens mit elastischem Schaumstoff gefüllt werden.

**Claims**

1. A double-walled flexible hose which in known manner consists of a helical profiled winding element (20, 30, 40, 50, 60) which, viewed in cross-section, comprises a central part (21, 33, 43, 53, 63) which corresponds to the wall thickness (Is) of

4

the hose, and extensions (22, 23; 31, 32; 41, 42; 51, 52; 61, 62) joined thereto which continue the outer and inner walls respectively of the central part and which are connected to adjacent surfaces of the profiled winding element characterised in that the profiled winding element (20, 30, 40, 50, 60) consists of a soft material and includes a helical reinforcement (26, 37, 47, 57, 67) which consists of a material which is hard by comparison, and which reinforcement is arranged in the central part (21, 33, 43) of the profiled element or in the extensions (51, 52, 61, 62), the arrangement being such that, between the helical reinforcement, the wound hose exhibits a helical cavity which is formed by the extensions (22, 23, 31, 32, 41, 42) of two adjacent turns, or in the central part (53, 63) of the profiled winding element.

2. A hose as claimed in claim 1, characterised in that a ⌐-section element is provided as a profiled winding element, having a central part (21, 33, 43) which forms at least a first cavity (25, 37, 47) which includes the reinforcement (26); and that the two extensions (22, 23; 31, 32; 41, 42) from a further cavity (24, 36, 46).

3. A hose as claimed in Claim 1, characterised in that the two extensions (51, 52; 61, 62) themselves in each case form a cavity (58, 68).

4. A hose as claimed in Claim 3, characterised in that on both sides of the central part (53), in cross-section triangular extensions (51, 52) are arranged which are connected to adjacent extensions (51, 52) of the profiled winding element through a common surface (54, 55).

5. A hose as claimed in Claim 3, charaterised in that the extensions (61, 62) ar provided with an attachment (69) which forms a constraining guide during the winding operation.

6. A hose as claimed in one of Claims 1 to 5, characterised in that the ratio of the width (a) of the cavities (24, 36, 46, 56, 66) which do not serve for reinforcement, to the width (b) of the reinforcement (26, 37, 47, 57, 67) equals/is greater than 1:1.

7. A hose as claimed in one of Claims 1 to 6, characterised in that the inner and outer walls of the hose and the walls (22, 23; 31, 32; 41, 42) defining the cavity (24, 36, 56, 66) have a thickness of approximately $0.2 \times s$ (s = wall thickness of the hose).

8. A hose as claimed in Claim 1, characterised in that the extensions (22, 23, 31, 32, 41, 42, 51, 52, 61, 62) overlap the central part (21, 33, 43, 53, 63) of the profiled element so as to be flush.

9. A hose as claimed in one of Claims 1 to 8, characterised in that the individual turns of the profiled winding element (30, 40, 50, 60) have sloped connecting surfaces (34, 35; 44, 45; 54, 55).

10. A hose as claimed in one of Claims 1 to 9, characterised in that a supporting helix (26, 37, 47, 57, 67) which is arranged in at least one of the cavities (25, 58, 68), is provided as reinforcement.

11. A hose as claimed in one of Claims 1 to 9, characterised in that the reinforcement (26, 37, 47, 57, 67) is formed by filling with foam the cavity concerned (25, 58, 68).

12. A hose as claimed in one of Claims 2 to 11, characterised in that the cavity (24, 36, 46, 56, 66) which is not used for a reinforcement, is filled with a soft, elastic material, preferably foam material.

13. A hose as claimed in one of Claims 2 to 11, characterised in that the cavity (24, 36, 46, 56, 66) which is not used for the reinforcement, is used for conducting leads, cables, or the like.

14. A hose as claimed in one of Claims 2 to 11, characterised in that the cavity (24, 36, 46, 56, 66) which is not used for the reinforcement, is closed in the radial direction and can thus be used for conducting a flowing medium.

15. A hose as claimed in one of Claims 1 to 14, characterised in that it is used as a suction and/or pressure hose in dental instruments.

16. A process for the production of double-walled, elastic hoses as claimed in one of claims 1 to 15, characterised in that a profiled element (20, 30, 40, 50, 60) which is produced by extrusion and preferably has a ⌐-shaped section, is wound in the plastic state to form a hose.

17. A process as claimed in Claim 16, characterised in that the cavities provided for the reinforcement are filled with an elastic foam material during the extrusion operation.

**Revendications**

1. Tuyau souple à double paroi, qui est constitué, d'une manière en soi connu, à partir d'un profilé enroulé (20, 30, 40, 50, 60) s'étendant hélicoïdalement, qui, vu en coupe transversale, comporte une partie médiane (21, 33, 43, 53, 63) correspondant à l'épaisseur (s) de la paroi du tuyau et des prolongements (22, 23; 31, 32; 41, 42; 51, 52; 61, 62) s'y raccordant, prolongeant les parois extérieure et intérieure de la partie médiane et reliés à des surfaces voisines du profilé enroulé, caractérisé en ce que le profilé enroulé (20, 30, 40, 50, 60) est en une matière molle et comporte un renforcement (26, 37, 47, 57, 67), s'étendant hlicoïdalement, en une matière relativement dure et disposé dans la partie médiane (21, 33, 43) du profilé ou dans les prolongements (51, 52, 61, 62), l'agencement étant tel que le tuyau enroulé présente entre le renforcement s'étendant hélicoïdalement en cavité s'étendant hélicoïdalement une cavité s'étendant hélicoïdalement, qui est formée par les prolongements (22, 23, 31, 32, 41, 42) de deux spires voisines ou dans la parti médiane (53, 63) du profilé enroulé.

2. Tuyau suivant la revendication 1, caractérisé en ce qu'il est prévu comme profilé enroulé un profilé en ⌐-ayant une partie médiane (21, 33, 43) qui forme au moins une première cavité (25, 37 47) contenant le renforcement (26) et en ce que les deux prolongements (22, 23; 31, 32; 41 42) forment une autre cavité (24, 36 46).

3. Tuyau suivant la revendication 1, caractérisé en ce que les deux prolongements (51, 52; 61, 62) forment, pour ce qui les concerne, chacun une cavité (58, 68).

4. Tuyau suivant la revendication 3, caractérisé en ce que de part et d'autre de la partie médiane (53) sont prévus des prolongements (51, 52) ayant en section transversale une forme triangulaire, et reliés par une surface commune (54, 55) à des prolongements (51, 5) voisins du profilé enroulé.

5. Tuyau suivant la revendication 3, caractérisé en ce que les prolongements (61, 62) sont munis d'une partie saillante (69) formant un guidage forcé lors du processus d'enroulement.

6. Tuyau suivant l'une des revendications 1 à 5, caractérisé en ce que le rapport de la largeur (a) des cavités (24, 36, 46, 56, 66) ne servant pas au renforcement à la largeur (b) du renforcement (26, 37, 47, 57, 67) est supérieur ou égal à 1:1.

7. Tuyau suivant l'une des revendications 1 à 6, caractérisé en ce que le paroi intérieure et extérieure du tuyau ou les parois (22, 23; 31, 32; 41, 42) délimitant la cavité (24, 36, 56, 46, 66) présente une épaisseur d'environ 0,2 × s (s = épaisseur de la paroi de tuyau).

8. Tuyau suivant la revendication 1, caractérisé en ce que les prolongements (22, 23, 31, 32, 41, 42, 51, 52, 61, 62) de la partie médiane (21, 33, 43, 53, 63) du profilé sont disposés à affleurement.

9. Tuyau suivant l'une des revendications 1 à 8, caractérisé en ce que les spires individuelles du profilé enroulé (34, 40, 50, 60) présentent des surfaces de liaison obliques (34, 35; 44, 45; 54, 55).

10. Tuyau suivant l'une des revendications 1 à 9, caractérisé en ce qu'il est prévu, comme renforcement, une hélice d'appui (26, 37, 47, 57, 67) disposée au moins dans l'une des cavités (25, 58, 68).

11. Tuyau suivant l'une des revendications 1 à 9, caractérisé en ce que le renforcement (26, 37, 47, 57, 67) est formé par des excroissances obtenues par moussage dans la cavité concernée (25, 58, 68).

12. Tuyau suivant l'une des revendications 2 à 11, caractérisé en ce que la cavité (24, 36, 46, 56, 66), qui n'est pas utilisée pour un renforcement, est emplie de matières élastiques moles, de préférence de matière mousse.

13. Tuyau suivant l'une des revendications 2 à 11, caractérisé en ce que la cavité (24, 36, 46, 56, 66), qui n'est pas utilisée pour le renforcement, est utilisée pour guider des conduits, des câbles ou des éléments semblables.

14. Tuyau suivant l'une des revendications 2 à 11, caractérisé en ce que la cavité (24, 36, 46, 56, 66), qui n'est pas utilisée pour le renforcement, est fermée dans la direciton radiale et peut être utilisée ainsi pour guider un milieu qui s'écoule.

15. Tuyau suivant l'une des revendications 1 à 14, caractérisé en ce qu'il est utilisé comme tuyau d'aspiration et/ou de refoulement dans des appareils de dentisterie.

16. Procédé de fabrication de tuyau souple à paroi double, suivant l'une des revendications 1 à 15, caractérisé en ce qu'il consiste à enrouler en un tuyau un profilé (20, 30, 40, 50, 60) à l'état plastique fabriqué par un procédé d'extrusion et ayant de préférence une section transversale en forme de ⌐.

17. Procédé suivant la revendication 16, caractérisé en ce qu'il consiste à emplir de matière mousse élastique, pendant l'extrusion, les cavités prévues pour le renforcement.

FIG 1

FIG 2

FIG 3

FIG 4

FIG 5

FIG 6